# EUROPEAN PATENT SPECIFICATION

(11) **EP 0 779 833 B1**
(45) Date of publication and mention of the grant of the patent: **23.06.1999**
(21) Application number: 95932658.8
(22) Date of filing: 02.09.1995
(51) Int. Cl.: B01D 47/14, B01D 53/18

(54) **PROCESS FOR COOLING, DEMONOMERIZING AND DEDUSTING GAS FROM A POLYMER DRIER**
VERFAHREN ZUR KÜHLUNG UND ENTFERNUNG VON MONOMEREN UND STAUB AUS ABGASEN VON EINEM TROCKNER FÜR POLYMERE
PROCEDE DE REFROIDISSEMENT, DEMONOMERISATION ET DEPOUSSIERAGE D'UN GAZ PROVENANT D'UN SECHEUR DE POLYMERE

(30) Priority: 08.09.1994 US 302309
(43) Date of publication of application: 25.06.1997
(73) Proprietor: BASF AKTIENGESELLSCHAFT, 67056 Ludwigshafen (DE)
(72) Inventor: VON DZIEMBOWSKI, Kasimir, D-67227 Frankenthal (DE); PERRYMAN, Howard, G., Lake Jackson, TX 77566 (US); MOORE, Leonard, H., Lake Jackson, TX 77566 (US)
(86) International application number: EP9503467
(87) International publication number: WO9607466

(56) References cited:
- WO-A-89/11073
- DE-A- 3 236 304
- DE-A- 3 606 080
- US-A- 4 043 773
- MARK H.F., OTHMER D.F., OVERBERGER C.G., SEABORG G.T. 'Kirk-Othmer Encyclopedia of Chemical Technology. Vol. 1' 1978 , WILEY & SONS , NEW YORK see page 53 - page 55
- "WERKSTOFF-FüHRER: KUNSTSTOFFE ; THIRD EDITION, PAGE 73', HELLERICH/HARSCH/HAENLE CARL HANSER VERLAG, MüNCHEN, WIEN

## Description

The present invention relates to cooling, demonomerizing and dedusting gas from a thermoplastic polymer drier.

At the end of the process for manufacturing certain thermoplastic polymers (like polyamides (nylons), polyesters, polyolefins, polyacrylates, polysulfones, polyethersulfones, polyacetals, polyvinyl-chloride, and polyurethanes) pellets, granules or chips are formed which are often cooled with water. These wet pellets, granules or chips are usually dried in a drier with a gas at an elevated temperature.

It is advantageous to recycle the gas to the drier. However, the gas exiting the drier contains polymer dust, monomers, oligomers and water which have to be separated from the gas in order to recirculate the gas in the drying process. This separation may be performed in several separate steps like a dedusting step (for example in a cyclone or a filter or a combination of both or a scrubber) and a separate cooling step.

US-A 4 043 773 discloses an apparatus for recovering particles, especially of poly(phenylen)sulfide, entrained in a vaporous vent by passing the vent into a scrubber which uses as scrubbing liquid a liquid in which the particles are bouyant. By this apparatus the vent is not demonomerized so that further steps are necessary.

WO 89/11073 discloses the purification of a gas stream comprising polyester granule dust, exiting a drying chamber a crystalliser producing polyester granules. Part of the gas stream is dedusted by the use of a cyclone and a filter.

The separation efficiency of the cyclone or the filter is not always satisfactory. Dust not separated in the cyclone or filter is deposited in the gas cooler and eventually causes pressure loss in the gas circulation. Monomers not removed deposit on the connecting pipes, e.g., the pipes connecting the polymer drier to the cyclone. Therefore, there remains a need in the manufacture of thermoplastic polymers and other processes where efficient separation of dust and by products, such as monomers and oligomers, from gas exposed to such things. There also remains a need to clean such gas in one step.

Accordingly, the present invention improves efficiency for a process for cooling, demonomerizing and dedusting gas from a thermoplastic polymer drier by directing the gas, containing thermoplastic polymer dust, monomers, oligomers, and water, into a packed column and washing the gas with a solvent.

It is an object of the present invention is to provide a process for cooling, demonomerizing and dedusting gas from a polymer drier all in one step and with high efficiency.

It was found that this object is achieved by a process for cooling, demonomerizing and dedusting a gas containing thermoplastic polymer dust, monomers and water from a thermoplastic polymer drier, comprising:
(a) directing into a column containing a packing; and
(b) in the column, washing the gas with a solvent.

Related objects and advantages of the present invention will be apparent to those of ordinary skill in the art after reading the following detailed description.
FIG. 1 is a schematic view of a cooling, demonomerizing and dedusting unit according to the present invention.
FIG. 2 is a top perspective view of a tellerette packing useful in the unit shown in FIG. 1.

To promote an understanding of the principles of the present invention, descriptions of specific embodiments of the invention follow, and specific language describes the same. It will nevertheless be understood that no limitation of the scope of the invention is thereby intended, and that such alterations and further modifications, and such further applications of the principles of the invention discussed are contemplated as would normally occur to one ordinarily skilled in the art to which the invention pertains.

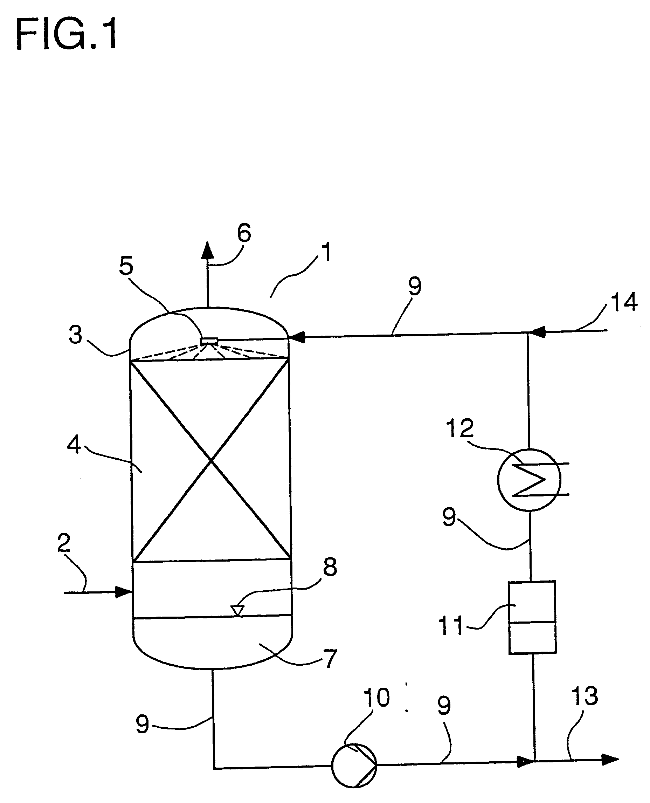

The present invention is a process for cooling, demonomerizing and dedusting gas from a thermoplastic polymer drier. FIG. 1 schematically shows an exemplary unit useful for practicing the present invention. Cooling, demonomerizing and dedusting unit (1) includes a washing column (3) with packed bed (4) and a recirculation loop with pump (10), filter (11) and cooler (12). An exhaust gas stream from a polymer drier and containing nitrogen, water and polymer dust passes through pipe (2) into washing column (3) of cooling, demonomerizing and dedusting unit (1). Washing column (3) includes a packed bed (4). Packed bed (4) is washed with water which is sprayed from the top of the washing column through spray nozzle (5) onto packed bed (4), thereby washing the exhaust gas stream, which passes from pipe (2) upwardly through packed bed (4). The exhaust gas stream, now washed and substantially free from dust, monomers and oligomers, exits the washing column through pipe (6) and contains nitrogen and water.

The wash water containing washed-out dust, monomers and oligomers is collected in reservoir (7). The level of dust, monomers and oligomers is controlled as desired by level control device (8). The wash water containing the dust, monomers and oligomers is recirculated through recirculation pipe (9) by pump (10). The dust is filtered out of the water in filter (11). The filtered recirculated water, containing monomers and oligomers is cooled in cooler (12) and recirculated to the top of the washing column, where it is sprayed again through nozzle (5).

Once a desired level in reservoir (7) is reached, the wash water is discharged over pipe (13). Depending on the concentration of recoverable products (e.g., caprolactam monomer), the overflow is directed to recovery for that product or to waste. In the initial phase of the process, water is added to recirculation pipe (9) from a water supply (not shown in FIG. 1) through pipe (14). During the process water comes also from water vapor in the gas stream which enters column (3) through pipe (2). This water condensed from the gas stream is added to reservoir (7).

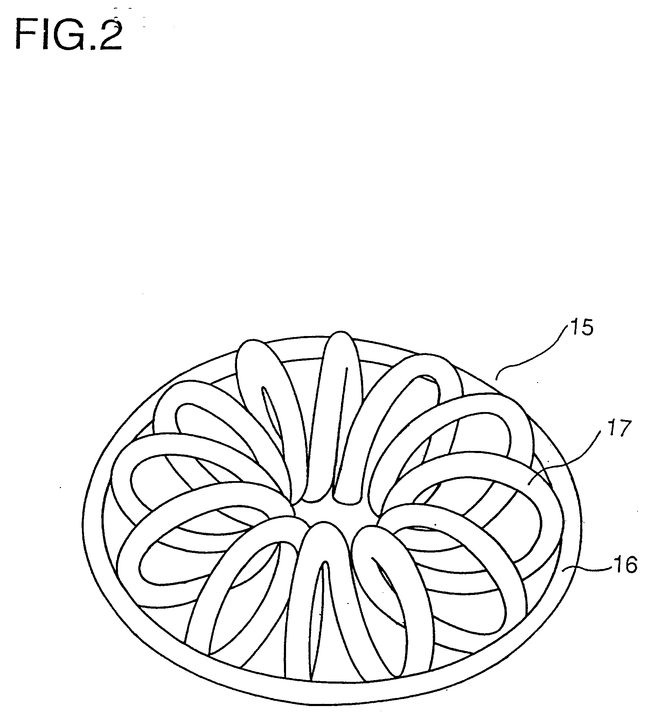

Packed bed (4) of column (3) is preferably filled with a multiplicity of tellerette packing (15) (shown in FIG. 2), which consists of ring (16) which encompasses spiral (17). Tellerettes are presently preferred because they excellently distribute the solvent, prevent formation of dust deposits and provide a low gas pressure loss.

The specific steps of the process for cooling, demonomerizing, and dedusting gas from a thermoplastic polymer drier are as follows: In step (a) gas from the thermoplastic polymer drier, which gas contains thermoplastic polymer dust, monomers and oligomers from the thermoplastic polymer and water vapor is directed into packing bed (4) of column (3).

Suitable thermoplastic polymers, whose drying gases may be cooled, demonomerized and dedusted according to the process of the present invention include, for example, polyamides, polyesters, polyolefins, polycarbonate, polyacrylonitrile, polyurethane, polysulfone, polyethersulfones, polyvinylchloride, copolymers of these and mixtures of these. The process of the present invention is particularly suitable with polyamides, such as nylon 6 and nylon 6/6, and especially with nylon 6 and copolymers of nylon 6, particularly copolymers of nylon 6 based on terephthalic acid or adipic acid. Suitable polyamides are nylon 6, nylon 6/6, nylon 6/9, nylon 6/10, nylon 6/12, nylon 11, nylon 12, copolymers thereof and mixtures thereof.

Monomers in the gas may include, for example, diamines, ε-caprolactam, diacids, diols, olefins, vinyl-chlorides, formaldehyde, and the like according to the respective thermoplastic polymer. In addition, oligomers of the respective monomers may be present.

Suitable gases containing thermoplastic polymer dust, monomers and water are air, nitrogen, hydrogen and mixtures thereof preferably nitrogen. When it enters the column, the gas containing thermoplastic polymer dust, monomers, oligomers and water preferably has a temperature of from about 30 to about 180°C, more preferably from about 50 to about 60°C. The water content of the gas is preferably from about 2% to about 10% by weight, based on the whole gas mixture, more preferably from about 6% to 10% by weight.

In step (b) the gas, containing the thermoplastic polymer dust, monomers and water is washed with a solvent in the column (3), while passing through packed bed (4). Suitable solvents are, for example, water, alcohols, amines, organic and inorganic acids, esters, ketones, ethers, paraffins and mixtures thereof. Water is preferred. The temperature of the solvent coming from spraying nozzle (5) is less than the temperature of the gas and is preferably in the range of 35 to 60°C. Suitable packing (15) for packing bed (4) are rings, cylinders and tellerettes. Tellerettes are shown in FIG. 2. Tellerettes are preferred. The packings may be made from a variety of materials, which are inert under the described washing conditions. Such materials include metals, pellets, and ceramics. Suitable metals include carbon steel, stainless steel and titanium. Suitable ceramics include aluminum oxides. Suitable plastics include polyethylene and polypropylene. Of course, other metals, ceramics and plastics might be used.

During this washing step (b), the thermoplastic polymer dust, the monomers and oligomers are washed out of the gas. The washed gas exiting the washing column contains from about 0.01 to about 3.0% by weight (based on the total weight of the washed gas) of monomers and oligomers, and less than 1.0% by weight of thermoplastic polymer dust, preferably less than 0.1% by weight.

Because of the temperature difference between the gas to be washed and the washing solvent, the washing solvent may be heated during the washing of the gas to temperatures of from 35°C to 60°C, preferably from 35°C to 40°C. This solvent is collected in reservoir (7) from which it is recirculated through pipe (9) by pump (10). In filter (11) dust can be filtered from the solvent. Suitable filters include, for example, fiber filters, which are filled with cotton or nylon fibers. The filtered solvent is cooled in cooler (12) to a temperature preferably of from about 10°C to about the temperature of the supplied gas (up to 60°C). Suitable coolers include, for example, a heat exchanger and cooling tower.

The filtered and cooled solvent is then recirculated for spraying through nozzle (5) in a counterflow against the gas which contains the thermoplastic polymer dust, monomers and water.

This invention will now be described by reference to the following detailed example. The example is set forth by way of illustration, and is not intended to limit the scope of the invention.

### EXAMPLE

A gas stream of 16000 Kg N₂/hour and 1000 Kg water/hour (as steam) from a nylon 6 (rel. vis. 4.08, measured as a 1% by weight solution in H₂SO4 at a temperature of 25°C) drier at a temperature of 65°C is passed into a column with a packing. The column has a diameter of 2.0m and a packed bed height of 5m. For the packing, 5,08 cm (2") polypropylene tellerettes are used. The gas stream is washed with 51,000 Kg water/hour of a temperature of 35°C. 375 Kg steam/hour is condensed and dust and monomers are washed out.

The gas stream exiting the column consists of 16,000 Kg/hour nitrogen and 592 Kg/hour water and has a temperature of 35°C. The monomer content is lower than 3% by weight and the nylon 6 dust content is lower than 600 ppm, based on the total weight of the gas mixture. The circulated water which was heated in the column to about 41°C and is subsequently cooled to 34°C in the cooler of a recirculation loop. The washed out dust is removed in a screen pack filter at a rate of about 5.5 Kg/day. When the level of dust, monomers and oligomers in the reservoir reaches a desired level, water is discharged out of the recirculation loop over pipe (13) (FIG. 1).

## Claims

1. A process for cooling, demonomerizing and dedusting a gas containing thermoplastic polymer dust, monomers and water from a thermoplastic polymer drier, comprises:
(a) directing into a column containing a packing; and
(b) in the column, washing the gas with a solvent.

2. The process according to claim 1 wherein the solvent is selected from the group consisting of water, alcohols, amines, organic and anorganic acids, esters, ketones, ethers, paraffins and mixtures thereof.

3. The process according to claim 1 or 2 wherein the solvent is water.

4. The process according to claims 1 to 3 wherein the packing is selected from a group consisting of rings, cylinders, and tellerettes.

5. The process according to claims 1 to 4 wherein the solvent in step (b) has a temperature of from 35 to 60°C.

6. The process according to claim 1 to 5 further comprising: (c) recirculating and reusing the solvent from step (b).

7. The process according to claim 6 wherein recirculating includes filtering the solvent.

8. The process according to claim 6 wherein the recirculating includes cooling the solvent to a temperature of from 10°C to 60°C.

## Patentansprüche

1. Verfahren zur Kühlung, Entmonomerisierung und Entstaubung eines staubförmiges thermoplastisches Polymer, Monomere und Wasser enthaltenden Gases aus einem Trockner für thermoplastische Polymere, bei dem man:
(a) das Gas in eine eine Füllung enthaltende Säule einleitet und
(b) in der Säule mit einem Lösungsmittel wäscht.

2. Verfahren nach Anspruch 1, bei dem man das Lösungsmittel aus der Gruppe bestehend aus Wasser, Alkoholen, Aminen, organischen und anorganischen Säuren, Estern, Ketonen, Ethern, Paraffinen und deren Gemischen auswählt.

3. Verfahren nach Anspruch 1 oder 2, bei dem man als Lösungsmittel Wasser einsetzt.

4. Verfahren nach einem der Ansprüche 1 bis 3, bei dem man die Füllung aus der Gruppe bestehend aus Ringen, Zylindern und Telleretten auswählt.

5. Verfahren nach einem der Ansprüche 1 bis 4, bei dem man in Schritt (b) das Lösungsmittel mit einer Temperatur von 35 bis 60°C einsetzt.

6. Verfahren nach einem der Ansprüche 1 bis 5, bei dem man ferner:
(c) das Lösungsmittel aus Schritt (b) zurückführt und wiederverwendet.

7. Verfahren nach Anspruch 6, bei dem man bei der Rückführung das Lösungsmittel filtriert.

8. Verfahren nach Anspruch 6, bei dem man bei der Rückführung das Lösungsmittel auf eine Temperatur von 10 bis 60°C abkühlt.

## Revendications

1. Procédé de refroidissement, de démonomérisation et de dépoussiérage d'un gaz contenant de la poussière de polymère thermoplastique, des monomères et de l'eau provenant d'un sécheur de polymère thermoplastique, consistant :
(a) à diriger dans une colonne contenant un garnissage; et
(b) dans la colonne, à laver le gaz avec un solvant.

2. Procédé suivant la revendication 1, dans lequel le solvant est choisi dans le groupe comprenant l'eau, les alcools, les amines, les acides organiques et inorganiques, les esters, les cétones, les éthers, les paraffines et leurs mélanges.

3. Procédé suivant l'une ou l'autre des revendications 1 et 2, dans lequel le solvant est l'eau.

4. Procédé suivant l'une quelconque des revendications 1 à 3, dans lequel le garnissage est choisi dans le groupe comprenant les anneaux, les cylindres et les tellerettes.

5. Procédé suivant l'une quelconque des revendications 1 à 4, dans lequel le solvant dans l'étape (b) a une température de 35 à 60°C.

6. Procédé suivant l'une quelconque des revendications 1 à 5, comprenant de plus : (c) la recirculation et la réutilisation du solvant de l'étape (b).

7. Procédé suivant la revendication 6, dans lequel la recirculation comprend la filtration du solvant.

8. Procédé suivant la revendication 6, dans lequel la recirculation comprend le refroidissement du solvant à une température allant de 10°C à 60°C.
